# EUROPEAN PATENT APPLICATION

(11) **EP 4 177 599 A1**
(43) Date of publication of application: **10.05.2023**
(21) Application number: 22205542.8
(22) Date of filing: 04.11.2022
(51) Int. Cl.: G01N 23/20033, G01N 23/2005, G01N 23/20041

(54) **ADSORPTION CHAMBER WITH REMOVABLE SAMPLE HOLDERS FOR X-RAY MEASUREMENTS**

(30) Priority: 08.11.2021 DE 102021129002
(71) Applicant: Technische Universität Dresden, 01069 Dresden (DE)
(72) Inventor: Kaskel, Stefan, 01069 Dresden (DE); Bon, Volodymyr, 01069 Dresden (DE); Romaka, Vitaly, 01069 Dresden (DE)
(74) Representative: Kailuweit & Uhlemann Patentanwälte Partnerschaft mbB

(57) **Abstract**

The invention provides an adsorption chamber having a non-zero transmittance for X-ray light comprising an outer chamber enclosed by an outer casing and at least one inner chamber at least partially enclosed by a further casing, with a defined leakage rate, at least one connection for temperature control and at least one removable sample holder for X-ray adsorption measurements in transmission or reflection geometries located in the inner chamber each contains two reservoirs for the powder-like solid sample with at least one reservoir located in the pathway of the X-ray light.

## Description

The invention provides an adsorption chamber having a non-zero transmittance for X-ray light.

In materials research, especially when studying the inner structures of solid or porous materials as well as dynamic processes in their interaction with their respective environment, X-rays and X-radiation are part of the tools of the trade. Depending on the task, different wavelengths of X-rays can be used to measure a different object of investigation in each case. For example, suitable wavelengths are used to examine crystal lattices of solids and their arrangement in space. With other wavelength ranges, it is also possible to resolve larger structures. The attenuation of the irradiated X-ray light can also be used as a measure and provide deeper insights into matter.

In V. Bon et al. / Microporous and Mesoporous Materials 188 (2014) 190-195 (DOI: 10.1016/j.micromeso.2013.12.024), the scientific experimental setup for in situ X-ray powder diffraction is described. It allows to follow structural changes in the crystal structure of flexible coordination polymers during adsorption and desorption of gases. The experimental setup is based on a closed-loop helium cryostat, which ensures high temperature stability in the range of 5.5 K to 450 K. An automatic gas dosing system is used. An automatic gas dosing system facilitates physisorption measurements in the pressure range from 0.01 kPa to 130 kPa. The experimental setup includes for its operation the KMC-2 and MAGS beamlines at the Helmholtz Zentrum Berlin für Materialien und Energie. With the disclosed setup, the adsorption of CO₂ and n-butane at 273 K on a flexible two-dimensional coordination polymer ELM-11 (ELM - Elastic Layer Material) was investigated.

In V. Bon et al. Adv. Funct. Mater. 2020, 30, 1907847 (DOI: 10.1002/adfm.201907847), measurement results of dynamic metal-organic frameworks (MOFs), which are a subset of frameworks with unique performance in terms of their pore size and/or the orientation of the framework components in response to specific guest molecules such as gases or solutes, are described. The authors focus on recent methodological developments of advanced in situ diffraction and spectroscopy techniques for comprehensive characterization of porous scaffolds. Examples of advanced instrumentation are given for in-situ nuclear magnetic resonance, electron paramagnetic resonance and optical spectroscopy, as well as X-ray and neutron diffraction.

The state of the art provides a chamber, made of beryllium, a toxic, expensive and hardly accessible material. None of the present documents describes adsorption chambers that use cheaper and easily accessible X-ray transparent materials.

The state of the art provides a chamber that has to be completely removed from the cryostat upon each sample change procedure, which is time-consuming and requires fine alignment of the chamber in the X-ray beam after each sample change. None of state-of-the-art documents describes an easily removable sample holder within the X-ray transparent adsorption chamber.

The object of the invention is to overcome the disadvantages of the state of the art in terms of construction and materials used and to realize an adsorption chamber which can be operated without the characteristic radiation qualities of high-energy plants.

Therefore, an adsorption chamber suitable for the passage of X-ray light and volumetric physisorption measurements comprising:
- an outer chamber enclosed by an outer casing and at least one inner chamber at least partially enclosed by an inner casing,
   ∘ the inner chamber being completely inside the outer chamber
   ∘the outer chamber and the inner chambers have regions arranged along the beam axis of incoming and scattered beam of X-ray light,
   ∘ the outer casing is preferably bell-shaped or cylinder-shaped with an open bottom area wherein the bottom area is shaped to be set onto a surface in an air-tight manner
   ∘ the button area of the outer casing and/or the surface comprising a sealing,
   ∘ at least one chamber is designed to be vacuum-capable,
   ∘ the outer casing and the inner chamber are designed to be at least partially permeable to X-ray light,
   ∘ the inner chamber has a defined leakage rate,
- the volume between the outer casing and the inner casing has at least one connection for evacuation,
- the inner casing is preferably bell-shaped or cylinder-shaped and is constructed from non-toxic X-ray transparent materials,
- the inner chamber has at least one gas connection,
- the inner casing is held by screws or other releasable connecting elements on a base element,
- at least one connection for temperature control of at least one chamber area, and
- two reservoirs for the powder-like solid sample positioned on a sample holder are located in the inner chamber with at least one reservoir located in the pathway of the X-ray light is disclosed,
- the sample holder is releasable attached to the base element.

Preferably the outer casing is only held by reduced air pressure if the room between inner and outer chamber is at least partially evacuated. Optionally the outer chamber comprises means to determine the orientation of the outer chamber. This means can be markers or pins which correspondent to holes in the surface or pins on the surface which correspondent to holes in the outer chamber. Alternatively and optionally, there are screws to hold the outer chamber on the surface.

In an embodiment the bottom area of the outer casing and/or the surface where the outer casing is set on comprise a sealing.

For holding the inner chamber on the base element, the inner chamber and the base element comprise flanges with a sealing between the flanges. Preferably the flanges are CF-flanges with an interposed sealing (Copper-ring-sealing).

The sample holder preferably comprises a mandrel which fits into a jacket of the base element in a tight manner. The mandrel and/or the jacket comprise optionally positioning means which support the defined positioning of the sample holder on the base element. The sample holder is held preferably by at least one releasable screw in a defined position in the base element.

In the following, the term X-ray light is understood to mean that part of the electromagnetic spectrum which lies in the wavelength range from 10⁻¹¹ m to 10⁻⁹ m.

In the following, the term beam axis is understood to mean the main direction of propagation of a bundled beam of electromagnetic waves. Assuming an ideally rotationally symmetrical beam cone, the beam axis coincides with the optical axis of the described optical system.

The term leakage rate describes the slow penetration of media - often gaseous media - into a closed, sealed and previously evacuated vessel. An evacuated vessel exists as soon as the absolute measured pressure inside the vessel is lower than the absolute measured pressure of the medium surrounding the vessel. The penetration of the surrounding medium into the evacuated vessel leads to a gradual equalization of the pressure ratios. This equalization can be described mathematically by an exponential relationship. If all parameters of the mathematical description of this behaviour are known, this is called the defined leakage rate - also in the sense of this document.

In embodiments of the invention, the X-ray light passing through the chamber system according to the invention has the radiation quality with the wavelengths ranging between 0.180 nm and 0.049 nm. This is advantageous as it allows an accurate prediction of the expected attenuation - more generally, the expected scattering processes - to be made by upstream computer-implemented methods. Furthermore, it is advantageous that with knowledge of the expected radiation quality, a targeted material selection can be carried out in the manufacturing process of the device according to the invention. Thus, in addition to the scientific and constructive advantages, there is also an economic advantage, as this results in potential savings through precise knowledge of the material.

In embodiments of the invention, the casings of the inner chamber and the outer chamber are constructed from several parts. This is advantageous because different materials can be used in this way. For example, and without being limited thereto, it is conceivable that some of the parts forming the casings have a lower attenuation coefficient for the irradiated X-ray light than others. Thus, a constructive and mechanical beam shaping is possible. This would also make it conceivable to have a precisely defined beam geometry that subsequently passes through the interior of the chamber. This has a metrological advantage, as the beam parameters of the X-ray beam can be determined.

In embodiments of the invention, the casings or at least parts of the casings are made of a material having a mass attenuation coefficient for Cu-Kα1 X-ray light of more than 0.75 cm² g⁻¹ and less than 5.0 cm² g⁻¹. This is advantageous as it allows a precise expectation to be formulated for the resulting chamber system. Thus - also advantageously - targeted analyses can be carried out with regard to possible sources of error, which in turn leads to a reduction in the systematic measurement uncertainty.

In embodiments of the invention, the material having said mass attenuation coefficient is selected from beryllium or alternatively glassy carbon, a polymer, silicon nitride, amorphous boron, boron nitride, a metal coated polymer or a mixture thereof. The glassy carbon material was machined by laser at the position where the X-ray beam enters and exits the chamber to reach an ultrathin thickness in the X-ray light path, wherein the thickness of the light path window is preferebaly between 0.4 mm and 0.6 mm.

In embodiments of the invention, the polymer used to form at least parts of the absorption chamber according to the invention is selected from polyetheretherketone or polyimide. This is advantageous because the choice of materials that are easy to process mechanically - with a correspondingly low mass attenuation coefficient - reduces the estimated manufacturing costs.

The lower manufacturing costs are reflected in production time and price and are thus also an economic advantage.

In embodiments of the invention, the average wall thickness of the portion of the casings penetrated by the X-rays is more than 0.1 mm and less than 1.0 mm, preferably more than 0.2 mm and less than 0.8 mm and more preferably more than 0.4 mm and less than 0.6 mm thick in case of beryllium is used. This is advantageous because it minimises scattering processes when the X-ray light passes through the chamber wall. The higher intensity of the resulting X-ray light prevailing in the measuring area enables a high contrast sharpness resulting in a good pattern quality.

In embodiments of the invention, the outer diameter of the outer casing is more than 30 mm and less than 150 mm, preferably more than 60 mm and less than 90 mm. This is advantageous as it ensures a compact design of the entire adsorption chamber. This at least supports the installation of the adsorption chamber according to the invention in laboratory-scale X-ray systems.

In embodiments of the invention, the outer radius of the casing of the inner chamber is more than 10 mm and less than 50 mm, preferably more than 15 mm and less than 25 mm. This has an advantageous effect on the volume of the inner chamber. Smaller volume of the inner chamber requires less time for evacuation, the virtual leakage - the outgassing of porous substances into an evacuated area - is shortened. Smaller volume of the inner chamber allows to use small amounts of sample material. Short measurement times have an overall economic advantage, as a higher measurement throughput can be achieved in given time intervals or a higher degree of precision is achieved, as several measurements can be carried out in given time intervals. In an adsorption chamber according to the invention, both chambers are preferably insulated from each other in such a way that independent gas pressure control is possible.

Advantages of the adsorption chamber according to the invention are:
- the sample holders are suitable for X-ray diffraction measurements in both transmission and reflection geometries,
- the sample holders are easily removable and do not need the readjustment in the X-ray beam,
- the sample cell is constructed from non-toxic and available on market X-ray transparent material.

In embodiments of the invention, both chambers are insulated from each other in such a way that independent temperature control of at least one of the chambers is possible. This is advantageous, because on the one hand the quality of the vacuum to be achieved in both chambers can be regenerated, because, for example, without being limited to this, independent heating or cooling of the inner chamber would be conceivable. Furthermore, additional process parameters can be set for the measurements. For example, and without being limited to this, the same temperatures can be generated in both chambers in order to minimize thermal fluctuations. In any case, this has an advantageous effect on the expected quality of the entire measurement.

In embodiments of the invention, the temperature control of at least one of the chambers is designed to achieve a temperature of more than 10 K and less than 410 K, preferably of more than 30 K and less than 300 K, inside the at least one chamber region. This is advantageous because cryostatic conditions can thus be realized within the measuring arrangement. Thus, the measuring arrangement can also be used for gaining knowledge in the low-temperature range. Furthermore, a large measuring range can be investigated in detail. The resulting advantages are primarily of a scientific nature. The outer chamber provides the thermal isolation and leads to a homogenous isothermal temperature control in the inner chamber for the gas and the sample holder.

In embodiments of the invention, the chamber suitable for vacuum can be evacuated to a pressure of more than 10⁻⁶ mbar and less than 10⁻² mbar. This is advantageous as it creates pressure conditions that are lower than the vapour pressure of most materials. For example, and without being limited to this, a targeted evacuation of the sample materials can be ensured, since the substances intended for loading have a higher vapour pressure and are removed almost completely from the chamber system.

In embodiments of the invention, the volume of the inner chamber is more than 10 cm³ and less than 100 cm³, preferably more than 20 cm³ and less than 40 cm³. The main reason and advantage of reducing of inner chamber volume is the possibility of volumetric physisorption measurements. If the volume is too large either larger sample amount is required or the sorption measurement accuracy decreases. The compact design is particularly advantageous for the use of the chamber in laboratory X-ray systems.

In embodiments of the invention, the leakage rate of the inner chamber is less than 0.5 Pa min⁻1, preferably less than 0.1 Pa min⁻1. The leakage rate is measured before the start of the measuring operation and is thus considered to be the leakage rate defined according to the invention. The advantage of this machine-specific property is the possibility of increasing the measurement precision, since a defined and known leakage rate can be used, for example and without being limited to it, as the basis for reference measurements.

In embodiments of the invention, two sample holders for the X-ray measurements for transmission and reflection geometries can be used and sample change procedure does not require complete removal of the entire adsorption chamber.

To change the sample holder the vacuum in the outer and the inner chamber is released. The outer casing can than easily be removed, because there is no extra fixing in the preferred embodiments. Now the inner casing is accessible. The screws of the inner casing can be released and the inner casing can be removed. Now the sample holder is accessible. The at least one holding screw of the sample holder is released and the sample holder can be exchanged. The reassembling is done in a reverse order. The sealing between the CF-Flanges of the inner casing and the base element needs to be changed before reassembling because the CF-flange is plastically deformed during the fixation of the inner casing and can only be use once.

In embodiments of the invention, the chamber system, or at least parts of the chamber system, is designed for precise height adjustment in a laboratory-scale X-ray diffractometer. The range of height adjustment extends from 0 mm to 10 mm, preferably from 0 mm to 5 mm. This is advantageous because it allows to precisely adjust the sample in the X-ray beam and perform the textural studies.

Sample holders according to present invention is characterized by two reservoirs for the powder-like solid sample, both of them have same temperature and gas pressure conditions and one of them located in the X-ray beam.

In embodiments of the invention, the sample holders are characterized by two reservoirs in the inner chamber that can accommodate more than 1 mg and less than 100 mg, preferably more than 5 mg and less than 35 mg of the solid powder-like sample.

Another object of the present invention relates to the use of an adsorption cell according to present invention in a laboratory-scale X-ray diffractometer - a measuring instrument with metric dimensions and safety enclosure, which allow to install it in the typical chemical or physical laboratory, typically used for analysing the structure of the solid matter from a scattering pattern, when an X-ray beam interacts with it.

Further object is the use of the adsorption cell for quantitative volumetric gas or vapor adsorption measurements at temperatures more than 10 K and less than 450 K, preferably more than 30 K and less than 300 K and gas pressure in the inner cell more than 0.1 Pa and less than 133 kPa, preferably more than 1 Pa and less than 101.3 kPa.

Another object of the invention is the use of the adsorption cell for the measurements of powder X-ray diffraction patterns in transmission and reflection geometries using ω-2θ scans in the 2θ range, more than 1° and less than 135°, preferably in the 2θ range more than 2° and less than 90°.

Still another object of the invention is the use of an adsorption cell for the fully automated parallelized volumetric adsorption measurements and powder X-ray diffraction measurements.

In order to realize the invention, it is also expedient to combine the above-described embodiments and features of the claims. The subject matter of the invention is described in more detail below with reference to non-limiting figures and in one example of embodiment.

### Drawings

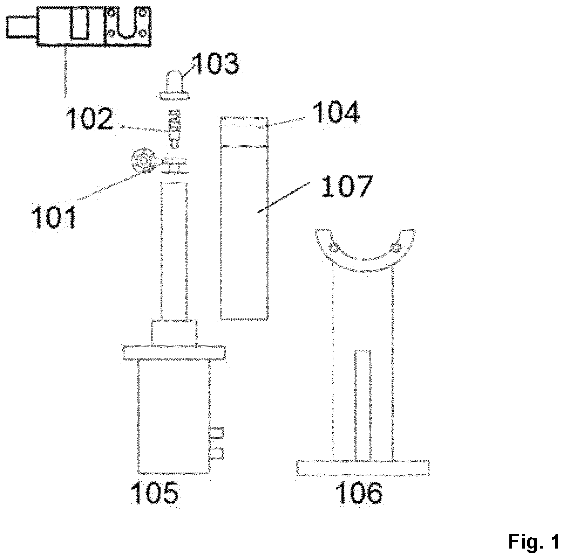

**Fig. 1** shows schematically a closed-cycle helium cryostat with adsorption chamber for X-ray measurements based on beryllium dome. The casing 103 of the inner chamber comprises in this drawing a bell shape.

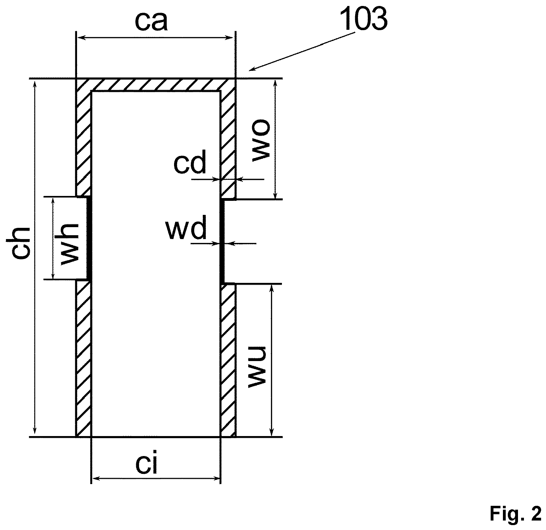

**Fig. 2** schematically shows the casing 193 of the inner chamber. In the drawing the casing 103 comprises a cylindric shape.

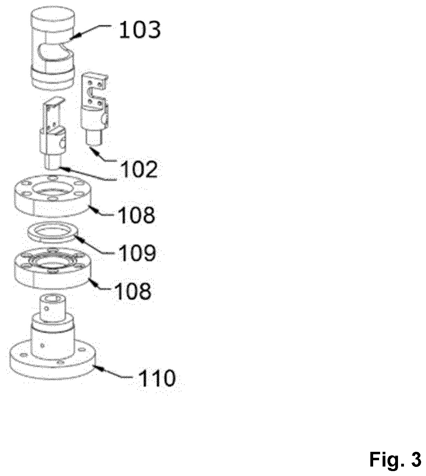

**Fig. 3** schematically shows a helium cryostat with closed circuit and adsorption chamber for X-ray measurements based on a variable setup, which has an entrance window for the beam to pass through.

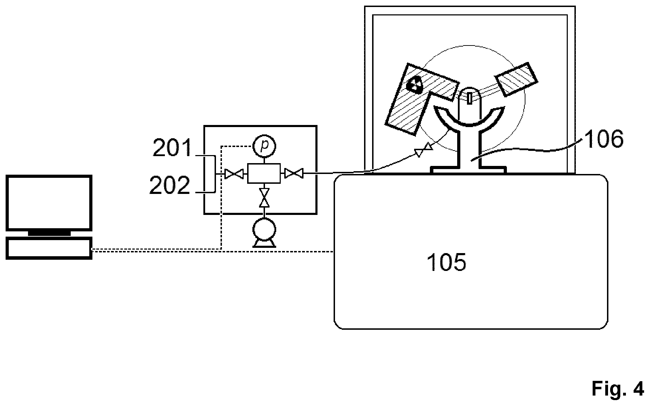

**Fig. 4** shows schematically a typical example of the use of adsorption chamber for parallelized in situ X-ray diffraction measurements and volumetric gas physisorption measurements.

### Example

The typical casing 103 of the inner chamber is based on a 1.33" CF flange 108, one part of which is brazed to the copper base 110. The copper base 110with a flange serves as the base element. The inner casing 103 comprises the following dimensions: ch= 34,0mm, ca=18,0 mm, ci=14,0 mm, wu=13,9 mm, wo=, 12,1 mm, wh= 8.0 mm, cd=2,0 mm, wd=0,5 mm. The copper base 110 together with the flange 108 is fixed on the cryohead 106 of the closed cycle helium cryostat 105 typically with four M3 screws. In order to increase the thermal conductivity, the connection place is typically treated with silver-based thermal paste. At least one gas inlet is brazed to the copper base 110 using 1/16" stainless steel capillary in the way that adsorption gas 202 can be dosed in the inner chamber or evacuated from the inner chamber in a controlled way. The other part of the 1.33" CF flange 108 is either glued to a glassy carbon inner casing 103 or brazed to a specially designed copper inner casing 103 which allows using different X-ray attenuation materials. Two parts of the 1.33" flange 108 are fixed together using six M4 screws and a corresponding copper seal ring 109.

The sample holders 102 for transmission and reflection measurement geometry (102) are designed in a way that they can be easily removed from or inserted into the adsorption chamber without dismounting of the base (110) from the cryostat. Since both parts (sample holder 102 and base 110) are made of copper in a way that sample holder 102 is plugged into the base 110 on 8 mm in depth and fixed with a screw from the side. This connection type ensures the good thermal contact and temperature stability in the inner chamber from one hand and simplifies the sample change procedure from another hand. The size of the sample holder 102 does not exceed the size of the inner chamber when both parts are assembled. The sample holder 102 is made of copper in two modifications: for transmission (T) and reflection (R) X-ray diffraction geometries, and is fixed to the copper base 110 using the hexagon socket screw (M2). In the sample holder 102, two sample chambers are designed to accommodate the powder-like samples. The first sample chamber is located in the X-ray beam path typically between two polyimide films of 5 µm thickness and allows both powder X-ray diffraction and gas physisorption measurements. The second sample chamber is larger in volume and can accommodate an additional sample, which is often required for precise physisorption measurements. Both sample chambers have direct contact with the copper base 110 and are located close to each other, which assures the negligible temperature gradients between the samples in both chambers.

In the typical low-temperature physisorption experiments, the outer chamber is required to avoid the condensation of water on the surface of the casing 103 of the inner chamber and to increase the thermal isolation of the inner chamber. The casing 107 of the outer chamber has a cylindrical shape, is constructed of stainless steel and is fixed on the cryostat typically using Viton O-rings. The casing 107 of the outer chamber comes typically with a 180° window in the X-ray beam path range to ensure the transparency for incoming and scattering X-ray beams. Typically, the window 104 is made of beryllium plate or polyimide foil, brazed or glued to the stainless steel casing 107 of the outer chamber. The outer chamber has a KF40 connection to a vacuum pump. Typically the pressure in the order of magnitude of 10⁻³ mbar or lower is sufficient for a stable running of the system in the temperature range from 30 K up to 300 K.

In the typical fully automated X-ray diffraction and gas adsorption experiment, the inner chamber is connected to a volumetric adsorption instrument and the temperature of the chamber is controlled using the temperature controller. The software of the adsorption instrument and X-ray diffractometer is connected using TTL-signals (from 0 V up to 5 V), which can be sent and received at both ends. The points of interest can be defined in the software of adsorption instrument and the batch program is typically started in the data collection software of X-ray diffractometer.

### Reference signs

- 101: in situ cell
- 102: removable sample holders for transmission and reflection geometry
- 103: inner casing
- 104: Beryllium window
- 105: cryostat
- 106: cryostat holder
- 107: outer casing
- 108: flange
- 109: seal ring
- 110: base element
- 201: Helium
- 202: adsorption gas
- ch: hight of the casing
- ca: outer diameter of the casing
- ci: inner diameter of the casing
- wu: height of the window above base of the casing
- wo: distance of the window from upper edge of the casing
- wh: height of the window
- cd: thickness of the wall of the casing
- wd: thickness of the wall in the window region

## Claims

1. Adsorption chamber suitable for the passage of X-ray light and volumetric physisorption measurements comprising:
• an outer chamber enclosed by an outer casing and at least one inner chamber at least partially enclosed by an inner casing,
∘ the inner chamber being completely inside the outer chamber,
∘ the outer chamber and the inner chambers have regions arranged along the beam axis of incoming and scattered beam of X-ray light,
∘ at least one chamber is designed to be vacuum-capable,
∘ the outer casing is preferably bell-shaped or cylinder-shaped with an open bottom area wherein the bottom area is shaped to be set onto a surface in an air-tight manner,
∘ the outer casing and the inner casing are designed to be at least partially permeable to X-ray light,
∘ the inner chamber has a defined leakage rate,
• the volume between the outer and the inner chamber has at least one connection for evacuation,
• the inner casing is preferably bell-shaped or cylinder-shaped and is constructed from non-toxic X-ray transparent materials,
• the inner chamber has at least one gas connection,
• the inner casing is held by screws or other releasable connecting elements on a base element,
• at least one connection for temperature control of at least one chamber,
• two reservoirs for the powder-like solid sample located in the inner chamber with at least one reservoir located in the pathway of the X-ray light
• the sample holder is releasable attached to the base element,
∘ the sample holders are suitable for X-ray diffraction measurements in both transmission and reflection geometries,
∘ the sample holders (Part 102 Fig.2) can be easily removed/exchanged/reintroduced from/in the cell base (Part 110 Fig.2), which does not influence the temperature stability and position of the sample in the X-ray beam.

2. Adsorption chamber according to claim 1, **characterized in that** the outer casing and the inner casing are at least partly permeable for X-ray light passing through with a wavelengths ranging between 0.180 nm and 0.049 nm.

3. Adsorption chamber according to one of the preceding claims, **characterized in that** at least one casing is made of several parts.

4. Adsorption chamber according to one of the preceding claims, **characterized in that** the inner and/or outer casing or at least parts of the inner and/or outer casing are made of a material with a mass attenuation coefficient for Cu-Kα1 X-ray light of more than 0.75 cm²g⁻¹ and less than 5.0 cm²g⁻¹.

5. Adsorption chamber according to claim 4, **characterized in that** the X-ray permeable part of the outer casing and/or the inner casing is made of glassy carbon, or is alternatively selected from beryllium, a polymer, silicon nitride, amorphous boron, a metal coated polymer.

6. Adsorption chamber according to claim 5, **characterized in that** the glassy carbon material was machined by laser at the position where the X-ray beam enters and exits the chamber to reach an ultrathin thickness in the X-ray light path, wherein the thickness of the light path window is preferably between 0.4 mm and 0.6 mm.

7. Adsorption chamber according to claim 5, **characterized in that** the polymer is selected from Polyetheretherketone or Polyimide.

8. Adsorption chamber according to one of the preceding claims, wherein the inner and/or outer casing are made of glassy carbon and **characterized in that** the average wall thickness of the part of the casing through which the X-rays penetrate is more than 0.1 mm and less than 1.0 mm, preferably more than 0.2 mm and less than 0.8 mm and in particular preferably more than 0.4 mm and less than 0.6 mm.

9. Adsorption chamber according to one of the preceding claims, wherein the inner and/or outer casing are made of polyimide film and **characterized in that** the average wall thickness of the part of the casing through which the X-rays penetrate is more than 0.05 mm and less than 0.5 mm, preferably more than 0.075 mm and less than 0.3 mm and in particular preferably more than 0.1 mm and less than 0.15 mm.

10. Adsorption chamber according to one of the preceding claims, wherein the inner and/or outer casing are made of beryllium and **characterized in that** the average wall thickness of the part of the casing through which the X-rays penetrate is more than 0.1 mm and less than 1.0 mm, preferably more than 0.2 mm and less than 0.8 mm and in particular preferably more than 0.2 mm and less than 0.3 mm.

11. Adsorption chamber according to one of the preceding claims, **characterized in that** both chambers are insulated from each other in such a way that independent gas pressure control and/or independent temperature control is possible.

12. Adsorption cell according to one of the preceding claims, **characterized in that** the temperature control is designed to achieve a temperature of more than 10 K and less than 410 K, preferably of more than 30 K and less than 300 K in the interior of the at least one chamber region.

13. Adsorption chamber according to any one of the preceding claims, **characterized in that** the leakage rate of the inner chamber of less than 0.5 Pa min⁻¹, preferably less than 0.1 Pa min⁻1.

14. Adsorption chamber according to any one of the preceding claims, **characterized by** two reservoirs in the sample holders for the powder-like solid sample, both of them have same temperature and gas pressure conditions.

15. Use of an adsorption chamber according to any one of claims 1 to 14
• in a laboratory-scale X-ray diffractometer or
• for quantitative volumetric gas or vapor adsorption measurements at temperatures more than 10 K and less than 450 K, preferably more than 30 K and less than 300 K and gas pressure in the inner cell more than 0.1 Pa and less than 133 kPa, preferably more than 1 Pa and less than 101.3 kPa and/or for the measurements of powder X-ray diffraction patterns in transmission and reflection geometries using ω-2θ scans in the 2θ range, more than 1° and less than 135°, preferably in the 2θ range more than 2° and less than 90°or
• for the fully automated parallelized volumetric adsorption measurements and powder X-ray diffraction measurements.
